# EUROPEAN PATENT APPLICATION

(11) **EP 3 719 718 A1**
(43) Date of publication of application: **07.10.2020**
(21) Application number: 20164610.6
(22) Date of filing: 20.03.2020
(51) Int. Cl.: G06Q 10/00

(54) **SOLUTION PROPOSAL SUPPORT SYSTEM AND SOLUTION PROPOSAL SUPPORT METHOD**

(30) Priority: 05.04.2019 JP 2019072515
(71) Applicant: Hitachi, Ltd., Tokyo 100-8280 (JP)
(72) Inventor: YUASA, Naohiro, Tokyo, 100-8280 (JP); KATOU, Hiroyasu, Tokyo, 100-8280 (JP); IKAWA, Naoki, Tokyo, 100-8280 (JP)
(74) Representative: MERH-IP Matias Erny Reichl Hoffmann Patentanwälte PartG mbB

(57) **Abstract**

A solution proposal support system includes a storage device 107 that stores information regarding an operational issue of a customer, and an arithmetic device that discloses information regarding the operational issue on a predetermined network, receives solution candidates for the operational issue and grounds information of effects of solving the operational issue from a plurality of provider terminals 300, notifies the grounds information of the effect of each of the solution candidates to each of the provider terminals 300 to inquire whether or not to approve a validity of the grounds information when a combination of solutions satisfying a solving condition indicated by the information regarding the operational issue is extracted from the solution candidates, and notifies a combination of the solution candidates and the grounds information of the effect of each of the solution candidates to a customer terminal 200 when the number of responses of approving the validity for the inquiry satisfies a predetermined standard.

## Description

### CROSS-REFERENCE TO RELATED APPLICATION

This application claims priority pursuant to 35 U.S.C. §119 from Japanese Patent Application No. 2019-072515, filed on April 5, 2019, the entire disclosure of which is incorporated herein by reference.

### BACKGROUND

### Technical Field

The present invention relates to a solution proposal support system and a solution proposal support method.

### Related Art

In the related art, a procurement operation in a company is completed in so-called affiliates in many cases. In this case, there is a limit in pursuing optimization for the quality, performance, and the like of a procurement target and procurement costs. Therefore, regarding a procurement operation between companies, a tendency to collect a wide range of participants for platforming has increased.

As a technique of the related art relating to the above-described platforming, for example, there is provided a cloud marketplace system in which a product including SaaS is bought or sold on a site on a communication network, the cloud marketplace system including: a first processing unit that manages a marketplace page providing product information to a customer on a product purchaser side; a second processing unit that manages product information registered from a product manager on a product seller side and manages information regarding purchase and contract of a product by a customer; a suitability diagnostic unit that performs a process for suitability diagnosis between the product and the customer; a database that stores data information including diagnosis information for the suitability diagnosis; a third processing unit that performs a process of registering the diagnosis information in the database from the product manager; and a fourth processing unit that performs a process of presenting information regarding a result of the suitability diagnosis as the result of the suitability diagnosis to the customer, in which the diagnosis information includes Q&A information for the suitability diagnosis and diagnosis rule information corresponding to the Q&A information, the diagnosis rule information includes information for calculating or associating suitability between a product as a target and a customer based on question and answer information for the Q&A information generated by the customer, and the information regarding the result of the suitability diagnosis includes information regarding the suitability between the product as the target and the customer (refer to JP-A-2013-45264).

In addition, for example, there is also provided an improvement effect evaluation support apparatus that supports an improvement effect evaluation of an operation using operation log data, the apparatus including: a storage unit that stores a plurality of operation analysis metrics tables including an operational issue, a solution to the operational issue, a to-be-extracted item used for evaluation of an improvement effect, and an evaluation formula obtained by trial calculation using the to-be-extracted item; means for receiving an association with log data for the to-be-extracted item from an analyzer and defining the to-be-extracted item according to the received association; means for calculating an effect trial calculation value using data and an evaluation formula extracted from a log according to the to-be-extracted item; and means for determining the effect trial calculation value as evaluation information (refer to JP-A-2016-031264).

Any technique of the related art is made assuming that a buyer (hereinafter referred to as a customer) and a supplier (hereinafter referred to as a provider) perform a one-to-one transaction. On the other hand, a form in which a plurality of providers propose one solution for an operational issue of a customer may also be present.

When a plurality of providers propose one solution as described above, the content of a solution provided by each of providers for an operational issue of a customer and the degree of the effect of the solution are likely to be unclear to the customer.

In addition, the effect of the above-described solution is unilaterally claimed by the provider and may be difficult to be approved by other providers. However, even if such a situation is unclear and only information regarding the solution as a final result is present, there is no room for the customer to review reliability of the effect in detail.

Accordingly, when each provider that participates in a proposal of a solution, the proposed solution, and an effect of the solution are unclear as described above, it is difficult for a customer to select an appropriate provider and an appropriate solution.

The same point shall be applied to an investor who makes investment and loan to a participant (mainly a provider) of a platform. From an investor's point of view, a record of proposing a solution that is approved by other companies and exhibits a reliable effect is important information in selecting a target for investment and loan. However, such information is not appropriately provided.

### SUMMARY

Therefore, an object of the present invention is to provide a technique of providing information to a stakeholder regarding an effect of each of solutions in one solution proposal that is made by a plurality of providers for an operational issue and an approval history thereof.

In order to achieve the above-described object, according to the present invention, there is provided a solution proposal support system including: a storage device that stores information regarding an operational issue of a customer; and/or an arithmetic device that executes a process of disclosing information regarding the operational issue on a predetermined network and receiving solution candidates for the operational issue and grounds information of effects of the solution candidates solving the operational issue from terminals of a plurality of providers, a process of notifying the terminal of each of the providers of the grounds information of the effect of each of the solution candidates to inquire whether or not to approve a validity of the grounds information when a combination of solutions satisfying a solving condition indicated by the information regarding the operational issue is extracted from the solution candidates, and/or a process of notifying a terminal of the customer of a combination of the solution candidates and the grounds information of the effect of each of the solution candidates when the number of responses of approving the validity for the inquiry satisfies a predetermined standard.

In addition, according to the present invention, there is provided a solution proposal support method including allowing an information processing system including a storage device that stores information regarding an operational issue of a customer to execute a process of disclosing information regarding the operational issue on a predetermined network and receiving solution candidates for the operational issue and grounds information of effects of the solution candidates solving the operational issue from terminals of a plurality of providers, a process of notifying the terminal of each of the providers of the grounds information of the effect of each of the solution candidates to inquire whether or not to approve a validity of the grounds information when a combination of solutions satisfying a solving condition indicated by the information regarding the operational issue is extracted from the solution candidates, and/or a process of notifying a terminal of the customer of a combination of the solution candidates and the grounds information of the effect of each of the solution candidates when the number of responses of approving the validity for the inquiry satisfies a predetermined standard.

According to the present invention, it is possible to provide information to a stakeholder regarding an effect of each of solutions in one solution proposal that is made by a plurality of providers for an operational issue and an approval history thereof.

### BRIEF DESCRIPTION OF THE DRAWINGS

FIG. 1 is a diagram illustrating a network configuration including a solution proposal support system according to an embodiment;
FIG. 2 is a diagram illustrating a functional configuration example of the solution proposal support system according to the embodiment;
FIG. 3 is a diagram illustrating a table configuration example stored in the solution proposal support system according to the embodiment;
FIG. 4 is a sequence diagram in a solution proposal support method according to the embodiment;
FIG. 5 is another sequence diagram in the solution proposal support method according to the embodiment;
FIG. 6 is a diagram illustrating a flow example 1 of the solution proposal support method according to the embodiment;
FIG. 7 is a diagram illustrating a flow example 2 of the solution proposal support method according to the embodiment;
FIG. 8 is a diagram illustrating a screen example 1 according to the embodiment;
FIG. 9 is a diagram illustrating a flow example 3 of the solution proposal support method according to the embodiment;
FIG. 10 is a diagram illustrating an example of a consent flow table according to the embodiment;
FIG. 11 is a diagram illustrating a screen example 2 according to the embodiment;
FIG. 12 is a diagram illustrating a screen example 3 according to the embodiment;
FIG. 13 is a diagram illustrating an example of a consent result history table according to the embodiment;
FIG. 14 is a diagram illustrating an example of an effect trial calculation formula registration table according to the embodiment;
FIG. 15 is a diagram illustrating a flow example 4 of the solution proposal support method according to the embodiment;
FIG. 16 is a diagram illustrating an example of an effect trial calculation result table according to the embodiment;
FIG. 17 is a diagram illustrating a screen example 4 according to the embodiment;
FIG. 18 is a diagram illustrating an example of a table for an investor according to the embodiment; and
FIG. 19 is a diagram illustrating a screen example 5 according to the embodiment.

### DETAILED DESCRIPTION OF EMBODIMENTS

### Network Configuration

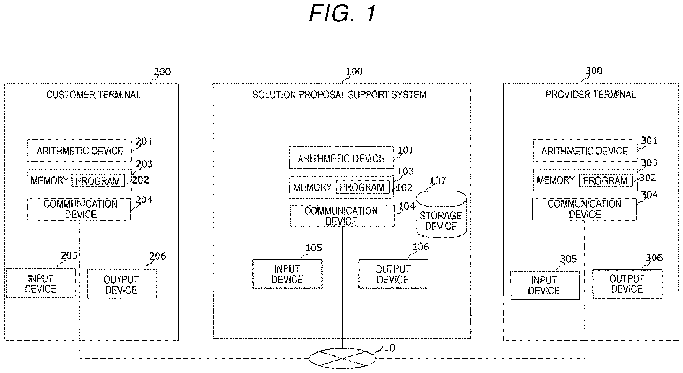

Hereinafter, an embodiment of the present invention will be described in detail using the drawings. FIG. 1 is a diagram illustrating a network configuration example including a solution proposal support system 100 according to the embodiment.

The solution proposal support system 100 illustrated in FIG. 1 is a computer system that provides information to a stakeholder regarding an effect of each of solutions in one solution proposal that is made by a plurality of providers for an operational issue and an approval history thereof.

The solution proposal support system 100 is connected to each of a customer terminal 200 and a provider terminal 300 to be capable of data communication via an appropriate network 10 such as the Internet.

FIG. 1 illustrates an example in which one customer terminal 200 and one provider terminal 300 are provided. Actually, however, a plurality of terminals are connected to the network 10.

The solution proposal support system 100 can be, for example, a server device that provides a platform mediating a solution proposal between companies on the network 10 as a service.

A hardware configuration of the solution proposal support system 100 includes an arithmetic device 101, a memory 103, a communication device 104, an input device 105, an output device 106, and a storage device 107, as shown in FIG. 1.

Among them, the arithmetic device 101 is a CPU that executes a program 102 read out to a memory 103, executes an integrated control of the apparatus itself, and executes various determination, calculation, control processes.

In addition, the memory 103 is configured with a volatile memory element such as a RAM.

In addition, as the communication device 104, a network interface card that is connected to the network 10 and communicates with other devices is assumed.

In addition, the input device 105 is a keyboard, a mouse, or a microphone that receives an input from a user through a key or a voice.

In addition, the output device 106 is a device such as a display or a speaker that displays process data.

In addition, the storage device 107 is configured with an appropriate non-volatile memory element such as a solid state drive (SSD) or a hard disk drive.

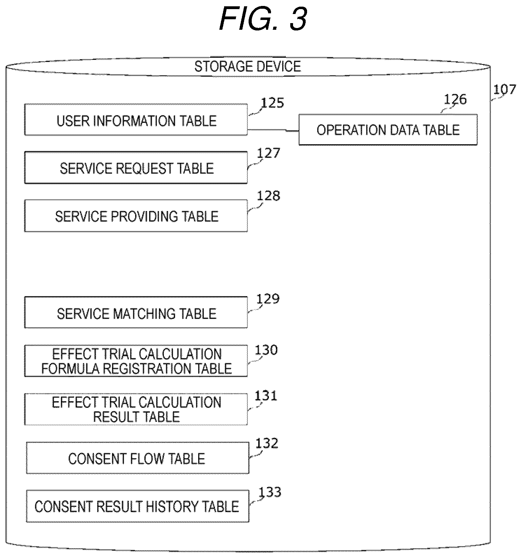

The storage device 107 stores at least not only programs or the like for implementing functions required as the solution proposal support system 100 according to the embodiment but also various tables 125 to 133 illustrated in FIG. 3. The details of the tables will be described below.

In addition, the customer terminal 200 is a terminal of a company that wants to receive a solution proposal for solving an operational issue of the company using the above-described platform. As a specific embodiment of the customer terminal 200, a PC can be assumed.

A hardware configuration of the customer terminal 200 is also the same as that of the above-described solution proposal support system 100, and the description thereof will not be repeated.

In addition, the provider terminal 300 is a terminal of a company that wants to propose the solution to an operating company of the above-described customer terminal 200 using the above-described platform. As a specific embodiment of the provider terminal 300, a PC can be assumed.

A hardware configuration of the provider terminal 300 is also the same as that of the above-described solution proposal support system 100, and the description thereof will not be repeated.

### Functional Configuration Example

Here, functional configurations of the customer terminal 200 and the provider terminal 300 will be described mainly focusing on functions of the solution proposal support system 100.

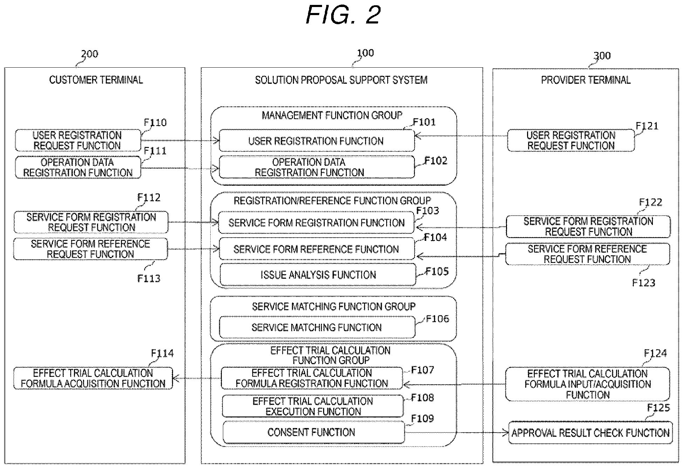

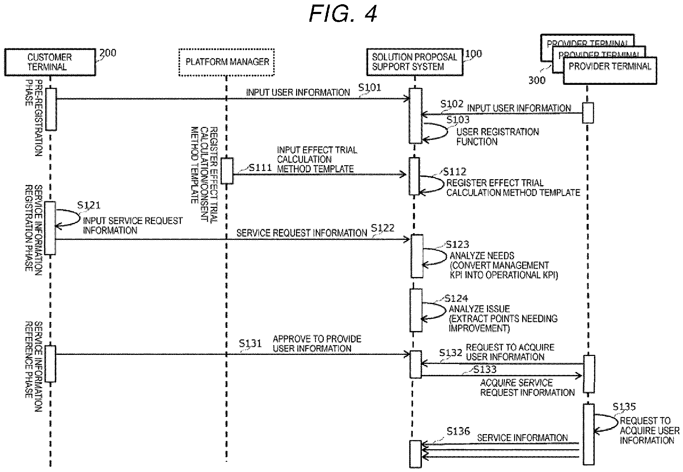

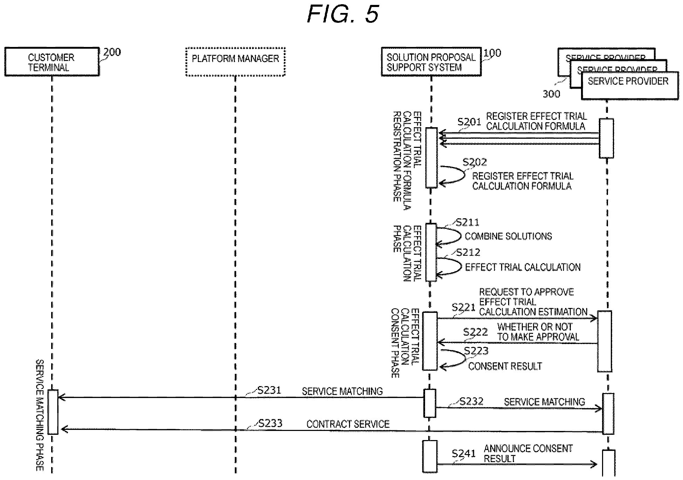

FIG. 2 is a diagram illustrating a functional configuration example of the solution proposal support system according to the embodiment. For the description of the functional configuration, sequence diagrams of FIGS. 4 and 5 illustrating a solution proposal support method are also used.

The customer terminal 200 has a user registration request function F110 of performing a request process (S101) for registering attribute information of the customer (for example, a company name, a location, a scale, or a person in charge) in the solution proposal support system 100.

In addition, the customer terminal 200 has an operation data registration function Fill of requesting the solution proposal support system 100 to register operation data of the customer (for example, an operation field, a sales, an operation cost, or holding facilities).

In addition, the customer terminal 200 has a service form registration request function F112 of requesting the solution proposal support system 100 to register (S121, S122) a service request (for example, cost reduction).

In addition, the customer terminal 200 has a service form reference request function F113 of requesting the solution proposal support system 100 to refer (S131) to a solution service proposed by the provider.

In addition, the customer terminal 200 has a trial calculation formula acquisition function F114 of acquiring information regarding a trial calculation formula (grounds information) of an effect registered by the provider regarding the solution from the solution proposal support system 100.

On the other hand, the solution proposal support system 100 has a user registration function F101 of registering (S103) information regarding the company of each of the users, that is, the customer and the provider in a user information table 125 from the customer terminal 200 and the provider 300.

In addition, the solution proposal support system 100 has an operation data registration function F102 of storing the operation data obtained from the customer terminal 200 in an operation data table 126.

In addition, the solution proposal support system 100 has a service form registration function F103 of storing information regarding the service request indicated by the service form registration request in a service request table 127 in response to the service form registration request from the customer terminal 200 and storing (S136) information regarding the solution service indicated by the service form registration request in a service providing table 128 in response to the service form registration request from the provider terminal 300.

In addition, the solution proposal support system 100 has a service form reference function F104 of extracting information that satisfies a condition indicated by the service reference request from the service request table 127 or the service providing table 128 and giving a response (S133) in response to the service form reference request from the customer terminal 200 or the service reference request from the provider terminal 300.

In addition, the solution proposal support system 100 has an issue analysis function F105 of analyzing (S123, S124; for example, extracting an operational KPI from a management KPI) an operational issue of the customer based on the service request table 127 and the operation data table 126.

In addition, the solution proposal support system 100 has a service matching function F106 of extracting (S211) a combination of solutions for solving the operational issue obtained by the issue analysis function F105 from the service providing table 128.

In addition, the solution proposal support system 100 has an effect trial calculation formula registration function F107 of acquiring a trial calculation formula of the effect of the solution provided by the provider from the provider terminal 300 and storing (S201, S202) the acquired trial calculation formula in the effect trial calculation formula registration table 130.

In addition, the solution proposal support system 100 has an effect trial calculation execution function F108 of calculating (S212) a total effect of a combination of solution candidates specified by the service matching function F106 using the trial calculation formula of the effect of each of the solutions registered in the effect trial calculation formula registration table 130 and storing the calculated total effect in an effect trial calculation result table 131.

In addition, the solution proposal support system 100 has a consent function F109 of inquiring (S221, S222) the provider terminal 300 of the supplier (that is, the provider) of each of the solutions included in the above-described combination of solution candidates about whether or not to approve a validity of (the trial calculation formula of) the effect of the solution and executing a consent process (S223) for the validity of the effect according to the approval result.

On the other hand, the provider terminal 300 has a user registration request function F121 of performing a request process (S102) for registering attribute information of the provider (for example, a company name, a location, a scale, or a person in charge) in the solution proposal support system 100.

In addition, the provider terminal 300 has a service form registration request function F122 of requesting the solution proposal support system 100 to register (S135) a solution (for example, an energy-saving plan for reducing an electricity cost) that can be provided by the provider.

In addition, the provider terminal 300 has a service form reference request function F123 of requesting the solution proposal support system 100 to refer (S132) to a service that is desired by the customer.

In addition, the provider terminal 300 has an effect trial calculation formula input/acquisition function F124 of performing a register process (S201) of (the trial calculation formula of) the effect of the solution provided by the provider in the solution proposal support system 100.

In addition, the provider terminal 300 has an approval result check function F125 of calling (S241) a consent result obtained by the consent function F109 of the solution proposal support system 100, that is, an aggregation result of the approval of the providers for the validity of the trial calculation formula.

### Solution Proposal Support Method

Hereinafter, an execution order of the solution proposal support method according to the embodiment will be described based on the drawings.

Various operations corresponding to the solution proposal support method described below are implemented by the program 102 that is executed by the solution proposal support system 100 using the memory or the like. The program 102 is configured with codes for executing various operations described below.

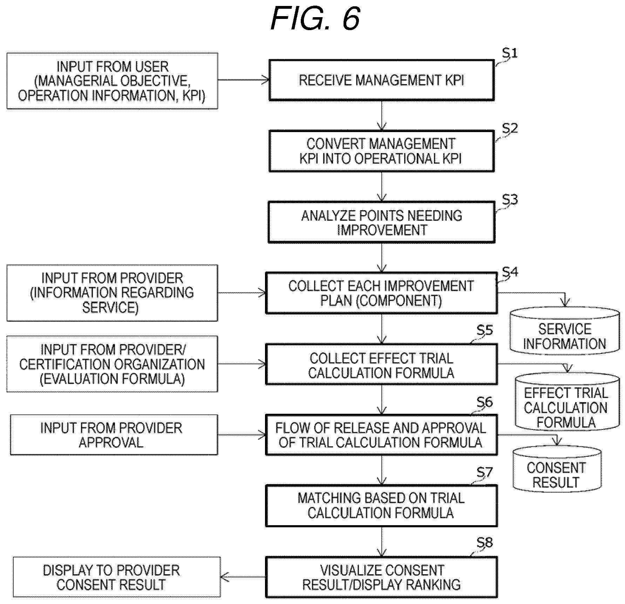

FIG. 6 is a diagram illustrating a flow example 1 of the solution proposal support method according to the embodiment. In this case, the solution proposal support system 100 acquires, for example, information regarding the management KPI (for example, a reduction of 3% in management cost) that is data regarding needs of the customer such as management improvement in response to the request from the customer terminal 200 (S1).

Next, the solution proposal support system 100 converts, for example, the value of the management KPI obtained in S1 into the value of the operational KPI according to a predetermined rule (S2, S3).

Specifically, it can be assumed that, among information defined by the operation data table 126 of the customer, for example, a running cost (for example, a power rate or a fuel cost) of each facility, a labor cost, or a sales promotion cost, information that is easily controlled and has a large control width is specified based on a predetermined past case or based on designation of a person skilled in the art, a reduction target (for example, an electricity rate) and a reduction width (for example, a reduction of 10%) are specified, and the value thereof is converted into the value of the operational KPI.

Of course, this configuration is merely an example, and designation of the operational KPI may be received from the customer terminal 200 from the beginning instead of S1 and S2.

Next, the solution proposal support system 100 releases the value of the operational KPI obtained in S3 on the network 10 as the information regarding the operational issue and collects a solution proposal from the provider (S4) .

At this time, the person in charge of each of the providers browses the information regarding the operational issue through the provider terminal 300, reviews a solution that can be proposed from the company, and transmits the information to the solution proposal support system 100 as a registration request for a solution candidate.

On the other hand, the solution proposal support system 100 receives the proposal of the above-described solution candidate (service form) from the provider terminal 300 and collects the effect trial calculation formula of the solution candidate from the provider terminal 300 (S5).

At this time, the person in charge of each of the providers inputs the effect trial calculation formula of the solution candidate through the provider terminal 300 and transmits a registration request including the effect trial calculation formula to the solution proposal support system 100.

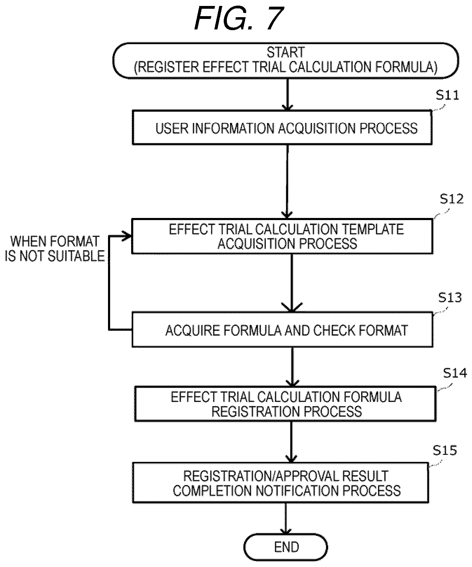

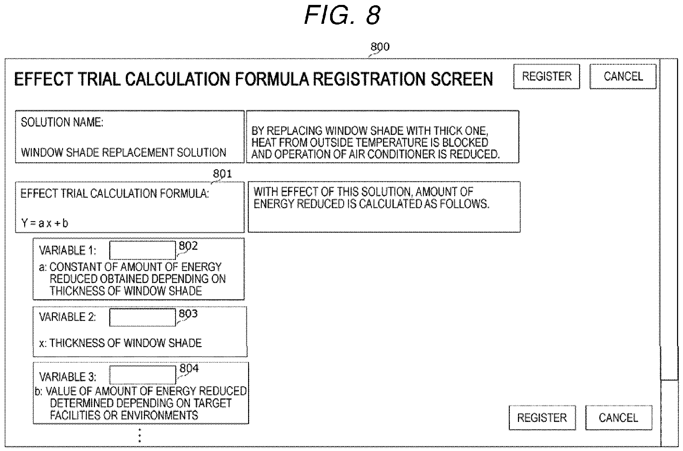

FIG. 7 illustrates an example of a detailed flow of the provider terminal 300 in the above-described case. FIG. 7 is a diagram illustrating a flow example 2 of the solution proposal support method according to the embodiment, and FIG. 8 is a diagram illustrating a screen example 1 according to the embodiment.

Here, the provider terminal 300 acquires various pieces of information regarding the above-described customer from the user information table 125 (that may include the operation data table 126) (S11).

As the information to be acquired here, for example, the value of each of conditions having an influence on the value of the above-described operational KPI, for example, the kind of a facility or an equipment (for example, a medium and high-rise office building), a specification (for example, reinforced concrete construction or high thermal insulation), a location environment (for example, south Kanto coast or south-facing), or a utility form (for example, main operation on weekdays 9 o'clock to 19 o'clock) can be assumed. The kind of the above-described information is reviewed in advance by the provider according to the condition and is stored in the provider terminal 300.

Next, the provider terminal 300 acquires a template corresponding to the above-described condition from a template collection of the effect trial calculation formula (S12) based on the information obtained in S11. Although not particularly illustrated in the drawing, as described above, a template of the effect trial calculation formula to be applied is reviewed in advance by the provider according to a combination of the values of the conditions such as the kind of a facility or an equipment, a specification, a location environment, or a utility form and the kind of the operational KPI (for example, an electricity rate), and is stored in the provider terminal 300 as the template collection.

The provider terminal 300 displays the effect trial calculation template obtained in S12 on the output device 306, for example, as in a screen 800 of FIG. 8, receives a modification or an input from the person in charge, and checks the format thereof (S13).

The screen 800 of FIG. 8 includes not only the display of an effect trial calculation formula 801 but also interfaces 802 to 804 for receiving modifications relating to variables of the effect trial calculation formula.

For the above-described check, the effect trial calculation formula that receives a modification or an input is compared to a rule of a format (for example, the number of digits, the kind of the value) that is determined in advance regarding the effect trial calculation formula to check whether or not the effect trial calculation formula matches the rule.

In addition, the provider terminal 300 transmits the registration request of the effect trial calculation formula having undergone S13 to the solution proposal support system 100 (S14) and stores the effect trial calculation formula in the effect trial calculation formula registration table 130. It is necessary that the validity of the effect trial calculation formula is approved by the consent process with another provider.

Next, the provider terminal 300 acquires the registration result of the effect trial calculation formula, that is, the consent process result of whether or not to approve the above-described validity from the solution proposal support system 100, displays the result on the output device 306 (S15), and ends the process.

Here, the description returns to the flow of FIG. 6. On the other hand, regarding each of the solution candidates obtained in S4, the solution proposal support system 100 releases the effect trial calculation formula obtained in S5 through the processes (S11 to S15) in the provider terminal 300 on the network 10 and aggregates responses for whether or not to approve the validity of the effect trial calculation formula the from each of the providers, that is, executes the consent process (S6).

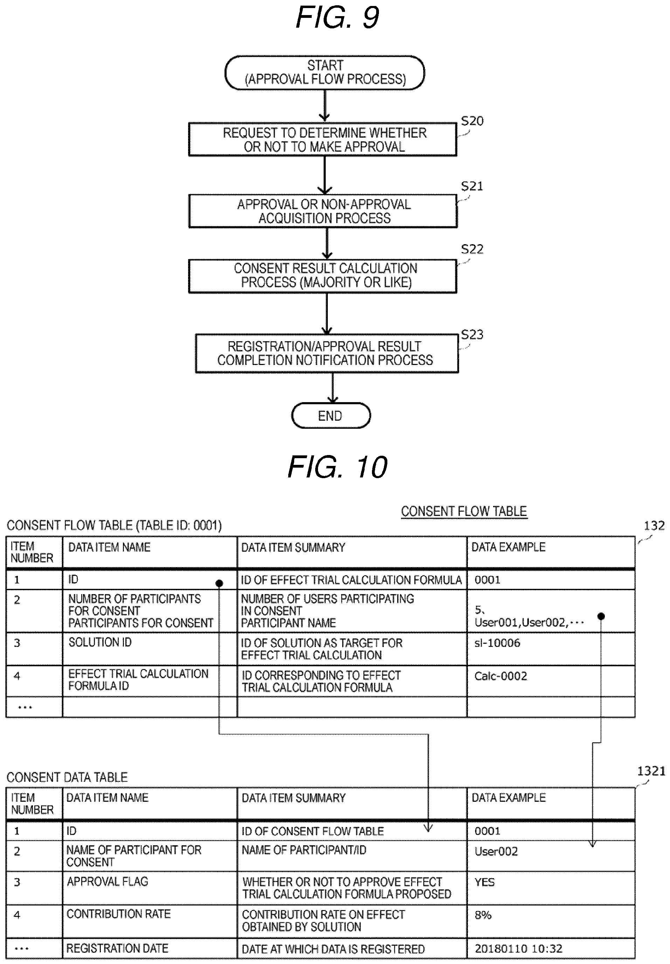

FIG. 9 illustrates a detailed flow example relating to the consent process. In this case, the solution proposal support system 100 distributes a determination request of whether or not to approve the validity of the effect trial calculation formula to each of the provider terminals 300, the request including information of the effect trial calculation formula obtained from the provider terminal 300 (S20).

This flow is executed according to a flow defined by a consent flow table 132. As illustrated in FIG. 10, the consent flow table 132 includes records including respective values of an ID of an effect trial calculation formula as a target, the number of participants for consent, a participant for consent, a solution ID (identification information of a solution associated with an effect trial calculation formula), and an ID of an effect trial calculation formula.

In addition, the consent flow table 132 is accompanied by a consent data table 1321 with a table ID as a key. This consent data table 1321 includes records including respective values of a name of a participant for consent, an approval flag, a contribution rate, and a registration date.

The number of effect trial calculation formulae obtained from the provider terminals 300 of the providers in S5 of FIG. 6 corresponds to the above-described number of participants, and the identification information of each of the providers who want to register the above-described effect trial calculation formula corresponds to the above-described name of the participant for consent.

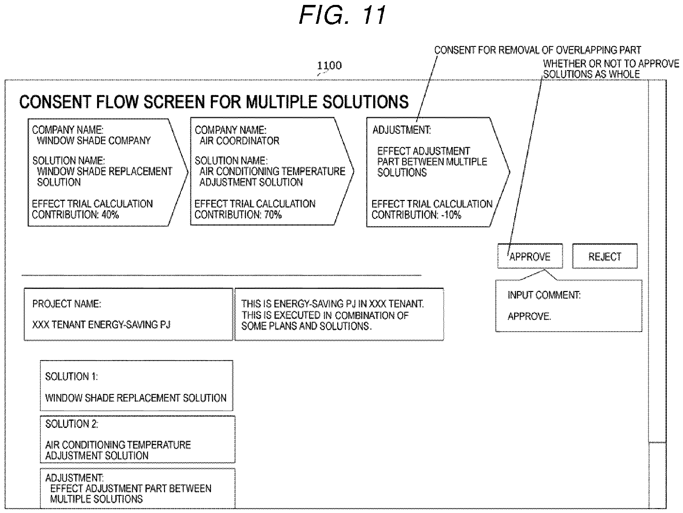

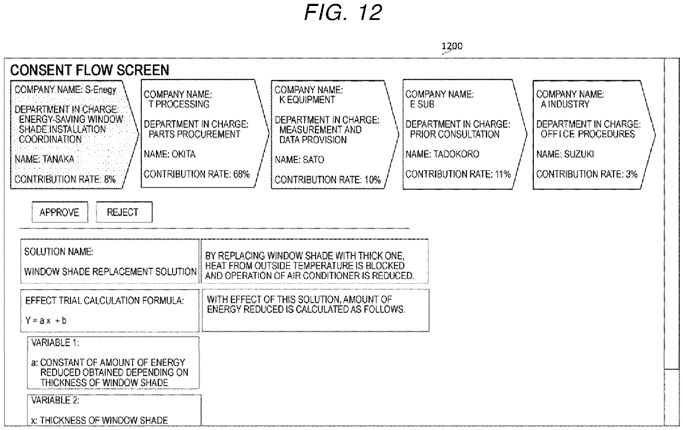

In this case, the solution proposal support system 100 distributes flow screens 1100 and 1200 illustrated in FIGS. 11 and 12 to each of the provider terminals 300 and receives an input of the determination result of whether or not to approve the validity according to the content of the above-described consent flow table 132.

The flow screen 1100 illustrated in FIG. 11 illustrates a consent flow in which the operational issue (for example, cost reduction) of the customer is dealt with a combination of a plurality of solutions (for example, a window shade replacement solution and an air conditioning temperature adjustment solution). In this case, in the solution proposal support system 100, it is assumed that the providers consent that the value of overlapping parts between the effects of solving the operational issue among a plurality of the solutions is excluded as "adjustment". Of course, in this case, it is assumed that a consent procedure relating to the adjusted value of the overlapping part is also defined in the consent flow table 132.

In addition, the flow screen 1200 illustrated in FIG. 12 corresponds to the consent flow relating to "window shade replacement solution" which is one among the plurality of solutions described above. That is, as a lower screen of the flow screen 1100, the flow screen 1200 illustrated in FIG. 12 is present by the number of solutions and the consent flow is executed on each of the screens.

In the example of the flow screen 1200 illustrated in FIG. 12, a managing company "S-Energy" as a coordinator of "the window shade replacement solution" is present, providers such as "T PROCESSING", "K EQUIPMENT", "E SUB", and "A INDUSTRY" are present as subsidiary companies, solutions are provided to the providers, and "window shade replacement solution" is configured as a whole.

Next, the solution proposal support system 100 acquires the determination result of whether or not to approve the validity from each of the provider terminals 300 to which the determination request is distributed in S20 (S21).

The example of FIG. 6 shows the result that a participant for consent "User 002" determines "YES" for the effect trial calculation formula "Calc-0002", that is, approves the effect trial calculation formula. The participant for consent "User 002" is, for example, any one of "S-Energy", "T PROCESSING", "K EQUIPMENT", "E SUB", and "A INDUSTRY" on the flow screen 1200 of FIG. 12.

In addition, regarding the determination result obtained in S21, the solution proposal support system 100 calculates the consent process result based on whether or not a response of approval, that is, a response of approving the validity of the effect trial calculation formula, is obtained from the majority (since the number of participants is five in the above-described example, three or more) of all the providers to which the determination request is distributed (S22).

In the above-described case, when the response of approval accounts for the majority, the value of "approval" is calculated as the consent process result. On the other hand, when the response of approval does not account for the majority, the value of "non-approval" is calculated as the consent process result.

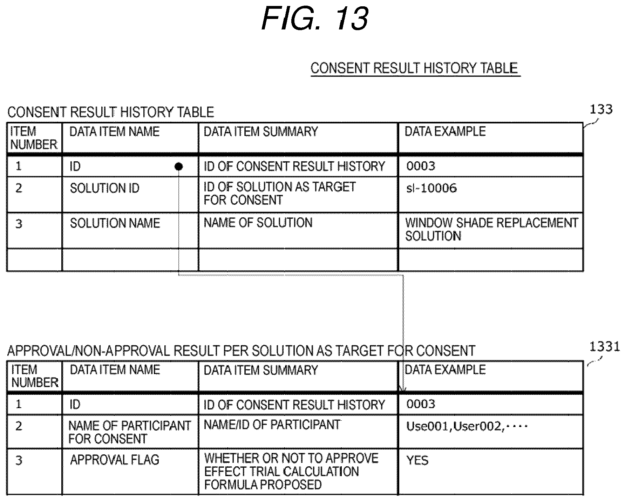

Next, the solution proposal support system 100 stores the consent process result obtained in S22 in a consent result history table 133 (refer to FIG. 13) (S23) and ends the process.

In the example (the consent result history table 133 and an approval/non-approval result 1331) of the consent result illustrated in FIG. 13, for example, a consent result of "YES", that is, approval is obtained regarding the solution name "window shade replacement solution".

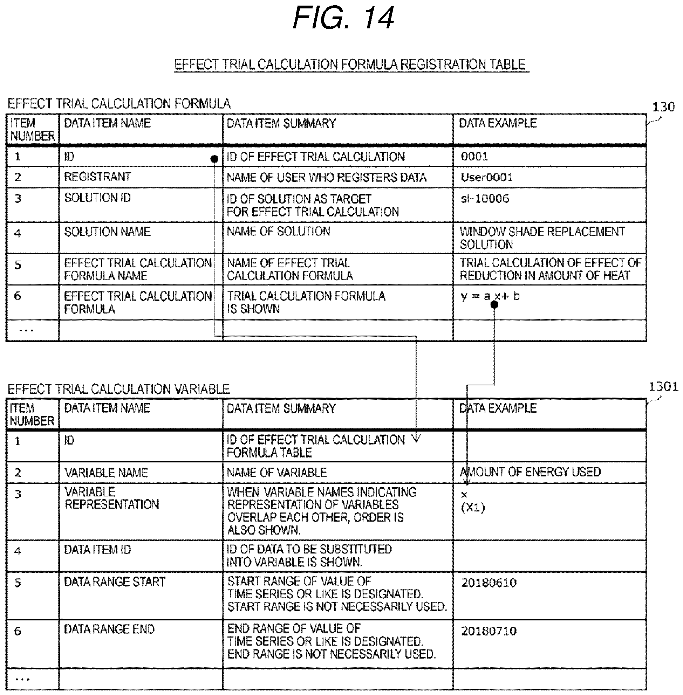

In addition, the solution proposal support system 100 registers the effect trial calculation formula for which the above-described consent result of the approval is obtained in the effect trial calculation formula registration table 130 (refer to FIG. 14). Of course, the registration of the effect trial calculation formula may be executed when the effect trial calculation formula is obtained from the provider terminal 300 in S5 in the flow of FIG. 6.

In the example of the effect trial calculation formula registration table 130 of FIG. 14, a formula "y = aX + b" is registered as an effect trial calculation formula "trial calculation of effect of reduction in amount of heat" relating to the above-described "window shade replacement solution". In addition, the definition of a variable X in the formula or the determination of a data range is made by an effect trial calculation variable 1301 associated with the effect trial calculation formula registration table 130.

Here, the description returns to the flow of FIG. 6. In this case, the solution proposal support system 100 executes a matching process of combining the solutions obtained in S4 to solve the operational issue (specified in S1 to S3) based on the effect trial calculation formula for which the approval is obtained, that is, the consent result is YES (S7).

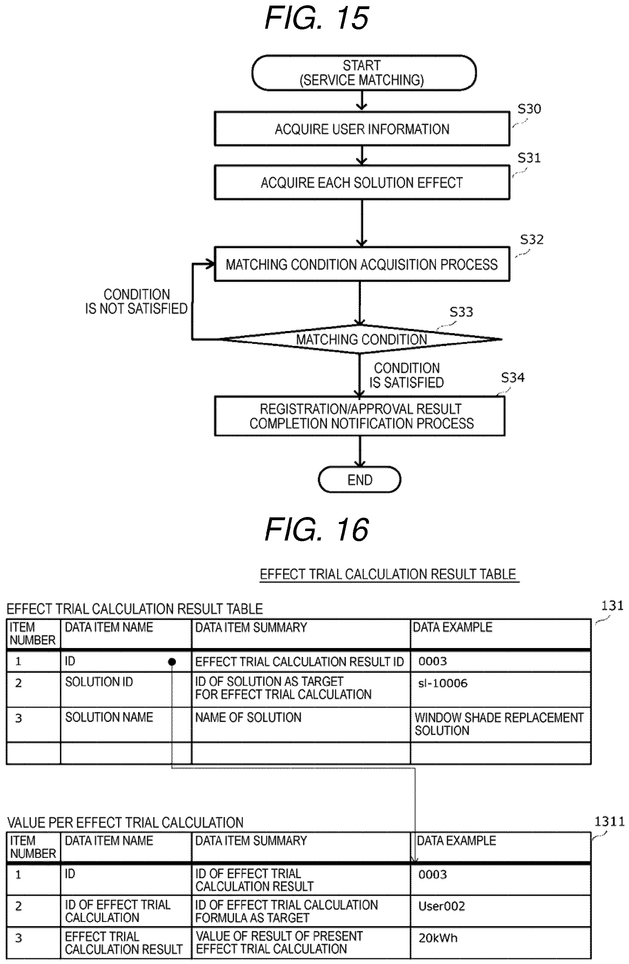

FIG. 15 illustrates a detailed flow example relating to the matching process. In this case, the solution proposal support system 100 acquires user information (that may include operation data) from the user information table 125 (that may include the operation data table 126) regarding the customer who inputs the operational issue as a target for the solution proposal in S1 (S30).

In addition, the solution proposal support system 100 applies the user information obtained in S30 to the variables of the effect trial calculation formula (extracted from the effect trial calculation formula registration table 130 of FIG. 14) of each of the solution candidates (obtained in S4; the consent result of the effect trial calculation formula is approved), and calculates the value of the effect of the solution candidate contributing to the operational issue (operational KPI) (S31). As illustrated in the effect trial calculation result table 131 of FIG. 16, the value of the effect to be acquired herein is "20 kWh (the amount of power consumption reduced = the amount of an electricity rate reduced).

In addition, the solution proposal support system 100 multiplies the value of the effect obtained in S31 by, for example, a predetermined coefficient (rate per unit electric power) to convert the value of the effect into the value of the operational KPI and determines whether or not this value satisfies a condition (for example, a reduction of 10,000,000 yen in cost) to be achieved regarding the operational KPI (S32).

When the above-described effect does not satisfy the condition to be achieved regarding the operational KPI (S33: when the condition is not satisfied) as a result of the above-described determination, the solution proposal support system 100 returns the process to S32. In this case, the solution proposal support system 100 further adopts a solution candidate in addition to (the effect trial calculation formula of) the solution candidate adopted in S32 and executes S32 in the same manner as above.

On the other hand, when the above-described effect satisfies the condition to be achieved regarding the operational KPI (S33: when the condition is satisfied) as a result of the above-described determination, the solution proposal support system 100 stores the combination of the solution candidates adopted so far and the effect trial calculation formula of the effect of each of the solution candidates in the storage device 107 as the result of the final solution proposal (S34), and ends the process.

Here, the description returns to the flow of FIG. 6. In this case, the solution proposal support system 100 notifies each piece of information (stored in the storage device 107 in S34) regarding the combination of the solution candidates obtained so far and the effect trial calculation formula of the effect of each of the solution candidates (S34) to the customer terminal 200 (S8), and ends the process.

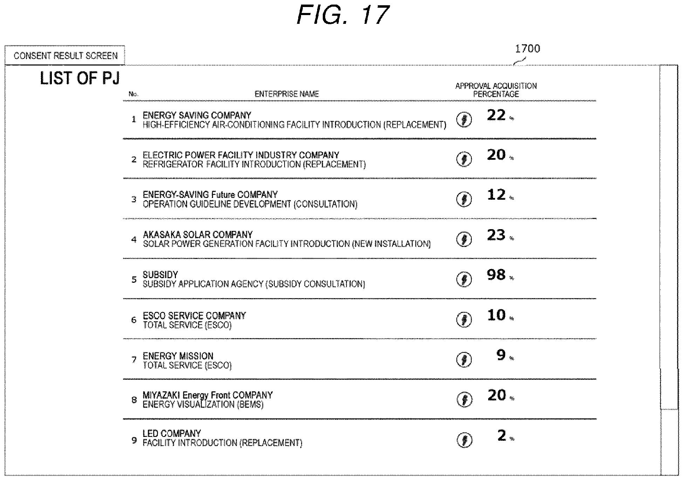

In the solution proposal support system 100, each piece of information regarding the solution candidate and the effect trial calculation formula to be notified in S8 may include a list of information indicating an approval acquisition percentage regarding each of the providers and the solution candidate thereof as illustrated in a screen 1700 of FIG. 17. The above-described acquisition percentage is a ratio of the number of providers from which the response of approval is obtained to the number of all the participating providers.

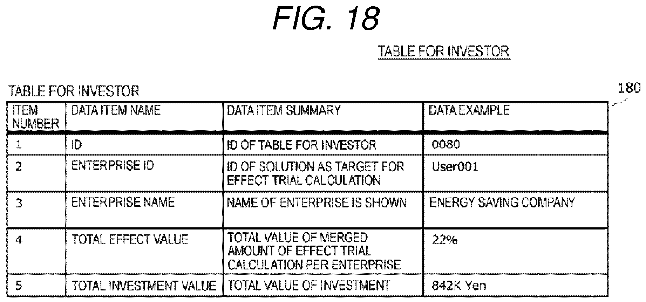

In addition, in another embodiment, a configuration in which the solution proposal support system 100 stores a table 180 for an investor illustrated in FIG. 18 can also be assumed.

The table 180 for an investor is a table including a history in which an investor who browses the information on the above-described screen 1700 of FIG. 17 distributed from the solution proposal support system 100 actually makes investment/loan to the provider.

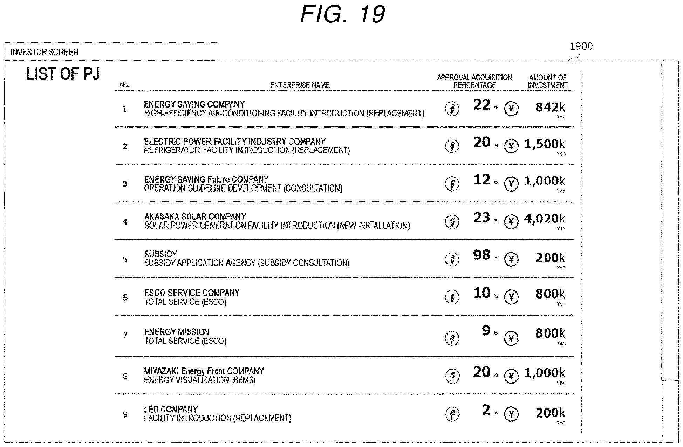

Accordingly, in this case, as illustrated in a screen 1900 of FIG. 19, regarding each of the providers and the solution candidate thereof, the solution proposal support system 100 may distribute a list of information indicating an approval acquisition percentage and an investment amount in which the provider obtains from the investor to the investor. In this case, a terminal of each of investors is connected to the network 10 to be capable of data communication.

Hereinabove, the best embodiment of the present invention has been described in detail. However, the present invention is not limited to the embodiment, and various modifications can be made within a range not departing from the scope of the present invention.

According to the embodiment, information can be provided to a stakeholder regarding an effect of each of solutions in one solution proposal that is made by a plurality of providers for an operational issue and an approval history thereof.

Through the description of the present specification, at least the following is obvious. That is, in the solution proposal support system according to the embodiment, the arithmetic device may notify a calculation formula of the effect as the grounds information when notifying the grounds information.

In this configuration, the calculation formula of the effect may be presented to the customer as the grounds information of the effect that is exhibited by the solution candidate. Further, information can be provided to a stakeholder in a more suitable form regarding an effect of each of solutions in one solution proposal that is made by a plurality of providers for an operational issue and an approval history thereof.

In addition, in the solution proposal support system according to the embodiment, in an operation flow in which the providers of the extracted solution candidates are arranged in a predetermined order during the inquiry about whether or not to approve the validity, the arithmetic device may sequentially acquire responses for whether or not to approve the validity from the providers according to the order.

In this configuration, each of the providers can efficiently determine whether or not to approve the validity of an effect as a target according to the operation flow. Further, information can be more efficiently provided to a stakeholder regarding an effect of each of solutions in one solution proposal that is made by a plurality of providers for an operational issue and an approval history thereof.

In addition, in the solution proposal support system according to the embodiment, when a response for whether or not to approve the validity is acquired from the terminal of the provider of each of the extracted solution candidates during the inquiry about whether or not to approve the validity and the number of providers from which a response of approving the validity is obtained becomes a majority of the providers, the arithmetic device may determine that the predetermined standard is satisfied.

In this configuration, the reliability of the effect can be efficiently determined by majority vote. Further, information can be provided to a stakeholder in a more suitable form regarding an effect of each of solutions in one solution proposal that is made by a plurality of providers for an operational issue and an approval history thereof.

In addition, in the solution proposal support system according to the embodiment, the arithmetic device may further execute a process of distributing, to a terminal of a predetermined investor as information regarding the provider, at least one piece of information among the grounds information in the solution candidate relating to the provider and a history of the response for whether or not to approve the validity that is obtained from another provider regarding the solution candidate.

In this configuration, appropriate information regarding investment suitability can be provided to an investor. Further, information can be provided to a stakeholder in a more suitable form regarding an effect of each of solutions in one solution proposal that is made by a plurality of providers for an operational issue and an approval history thereof.

In the solution proposal support method according to the embodiment, the information processing system may notify a calculation formula of the effect as the grounds information when notifying the grounds information.

In the solution proposal support method according to the embodiment, in an operation flow in which the providers of the extracted solution candidates are arranged in a predetermined order during the inquiry about whether or not to approve the validity, the information processing system may sequentially acquire responses for whether or not to approve the validity from the providers according to the order.

In the solution proposal support method according to the embodiment, when a response for whether or not to approve the validity is acquired from the terminal of the provider of each of the extracted solution candidates during the inquiry about whether or not to approve the validity and the number of providers from which a response of approving the validity is obtained becomes a majority of the providers, the information processing system may determine that the predetermined standard is satisfied.

In the solution proposal support method according to the embodiment, the information processing system may further execute a process of distributing, to a terminal of a predetermined investor as information regarding the provider, at least one piece of information among the grounds information in the solution candidate relating to the provider and a history of the response for whether or not to approve the validity that is obtained from another provider regarding the solution candidate.

Although the present disclosure has been described with reference to example embodiments, those skilled in the art will recognize that various changes and modifications may be made in form and detail without departing from the spirit and scope of the claimed subject matter.

## Claims

1. A solution proposal support system comprising:
a storage device that stores information regarding an operational issue of a customer; and
an arithmetic device that executes a process of disclosing the information regarding the operational issue on a predetermined network and receiving solution candidates for the operational issue and grounds information of effects of the solution candidates solving the operational issue from terminals of a plurality of providers, a process of notifying the terminal of each of the providers of the grounds information of the effect of each of the solution candidates to inquire whether or not to approve a validity of the grounds information when a combination of solutions satisfying a solving condition indicated by the information regarding the operational issue is extracted from the solution candidates, and a process of notifying a terminal of the customer of a combination of the solution candidates and the grounds information of the effect of each of the solution candidates when the number of responses of approving the validity for the inquiry satisfies a predetermined standard.

2. The solution proposal support system according to claim 1,
wherein the arithmetic device notifies a calculation formula of the effect as the grounds information when notifying the grounds information.

3. The solution proposal support system according to claim 1,
wherein in an operation flow in which the providers of the extracted solution candidates are arranged in a predetermined order during the inquiry about whether or not to approve the validity, the arithmetic device sequentially acquires responses for whether or not to approve the validity from the providers according to the order.

4. The solution proposal support system according to claim 1,
wherein when a response for whether or not to approve the validity is acquired from the terminal of the provider of each of the extracted solution candidates during the inquiry about whether or not to approve the validity and the number of providers from which a response of approving the validity is obtained becomes a majority of the providers, the arithmetic device determines that the predetermined standard is satisfied.

5. The solution proposal support system according to claim 1,
wherein the arithmetic device further executes a process of distributing, to a terminal of a predetermined investor as information regarding the provider, at least one piece of information among the grounds information in the solution candidate relating to the provider and a history of the response for whether or not to approve the validity that is obtained from another provider regarding the solution candidate.

6. A solution proposal support method comprising:
allowing an information processing system including a storage device that stores information regarding an operational issue of a customer to execute a process of disclosing information regarding the operational issue on a predetermined network and receiving solution candidates for the operational issue and grounds information of effects of the solution candidates solving the operational issue from terminals of a plurality of providers, a process of notifying the terminal of each of the providers of the grounds information of the effect of each of the solution candidates to inquire whether or not to approve a validity of the grounds information when a combination of solutions satisfying a solving condition indicated by the information regarding the operational issue is extracted from the solution candidates, and a process of notifying a terminal of the customer of a combination of the solution candidates and the grounds information of the effect of each of the solution candidates when the number of responses of approving the validity for the inquiry satisfies a predetermined standard.

7. The solution proposal support method according to claim 6,
wherein the information processing system notifies a calculation formula of the effect as the grounds information when notifying the grounds information.

8. The solution proposal support method according to claim 6,
wherein in an operation flow in which the providers of the extracted solution candidates are arranged in a predetermined order during the inquiry about whether or not to approve the validity, the information processing system sequentially acquires responses for whether or not to approve the validity from the providers according to the order.

9. The solution proposal support method according to claim 6,
wherein when a response for whether or not to approve the validity is acquired from the terminal of the provider of each of the extracted solution candidates during the inquiry about whether or not to approve the validity and the number of providers from which a response of approving the validity is obtained becomes a majority of the providers, the information processing system determines that the predetermined standard is satisfied.

10. The solution proposal support method according to claim 6,
wherein the information processing system further executes a process of distributing, to a terminal of a predetermined investor as information regarding the provider, at least one piece of information among the grounds information in the solution candidate relating to the provider and a history of the response for whether or not to approve the validity that is obtained from another provider regarding the solution candidate.
